# EUROPEAN PATENT SPECIFICATION

(11) **EP 2 246 144 B1**
(45) Date of publication and mention of the grant of the patent: **25.02.2015**
(21) Application number: 10158222.9
(22) Date of filing: 29.03.2010
(51) Int. Cl.: B23K 26/26, B23K 26/20

(54) **A method of high-powered laser beam welding of articles using a metallic shim produding from the surfaces of the articles ; Assembly therefore**
Verfahren zum Hochleistungs-Laserstrahlschweißen von Werkstücken mit einer über die Oberfläche der Werkstücke protrudierenden metallischen Folie ; Anordnung dafür
Procédé de soudage par faisceau laser haute puissance de pièces avec une feuille métallique dépassant de la surface des pièces ; Ensemble correspondant

(30) Priority: 31.03.2009 US 415305
(43) Date of publication of application: 03.11.2010
(73) Proprietor: General Electric Company, Schenectady, NY 12345 (US)
(72) Inventor: NOWAK, Daniel Anthony, Greenville, SC 29607 (US)
(74) Representative: Cleary, Fidelma

(56) References cited:
- DE-A1- 2 423 577
- JP-A- 2 151 374
- JP-A- 5 123 878
- JP-A- 61 232 078
- US-A1- 2007 017 906
- US-B1- 6 489 583

## Description

The present invention generally relates to welding methods. More particularly, this invention is directed to a method of welding metallic materials using a high-powered laser beam according to the preamble of claim 1, by which the weld keyhole is stabilized to reduce spattering and weldment discontinuities, and to an assembly for performing a high powered layer beam welding process.

Various metallic alloys, including nickel-, iron-, and cobalt-based superalloys, are widely used to form components of gas turbine engines. Metallic components are often formed by casting, and for some applications are preferably or necessarily fabricated by welding or brazing as a result of complex geometries or other assembly considerations.

Low-heat input welding processes, and particularly high-energy beam welding processes such as laser beam and electron beam welding (LBW and EBW, respectively) operated over a narrow range of welding conditions, have been successfully used to produce crack-free weld joints in single-crystal and polycrystalline superalloys and other metallic materials used for gas turbine engine components. An advantage of high-energy beam welding processes is that the high-energy density of the focused laser or electron beam is able to produce deep narrow welds of minimal weld metal volume, enabling the formation of structural butt welds that add little additional weight and cause less component distortion in comparison to other welding techniques, such as arc welding processes. Additional advantages particularly associated with laser beam welding include the ability to be performed without a vacuum chamber or radiation shield usually required for electron beam welding. Consequently, laser beam welding can be a lower cost and more prodluctive welding process as compared to electron beam welding.

Laser beam and electron beam welding are typically performed autogenously (no additional filler metal added). The high-energy beam is focused on the surface to be welded, for example, an interface between two components to be welded. During welding, the surface is sufficiently heated to vaporize a portion of the metal, creating according to the preamble of claim 6 (see, for example, US 2007/017906 A). a cavity ("keyhole") that is subsequently filled by the molten material surrounding the cavity. For certain applications and conditions, filler materials have been used. For example, powdered filler metals have been employed in laser welding to form a hardface/clad layer or buildup. Shims have also been used, for example, in electron beam welding processes as disclosed in U.S. Patent No. 6,489,583 to Feng et al. to avoid the formation of centerline cracks, and in laser and electron beam welding processes as disclosed in U.S. Patent No. 6,596,411 to Feng et al. to reduce the incidence of cracking in superalloys containing relatively high levels of refractory metals. In these applications, a shim is placed between the faying surfaces of the articles to be welded, and then melted during the welding process to form part of the weldment that metallurgically joins the articles. The chemistry of the shim may be selected to improve the chemistry of the resultant weldment and/or allow the welding of less-tolerant machined weld joints.

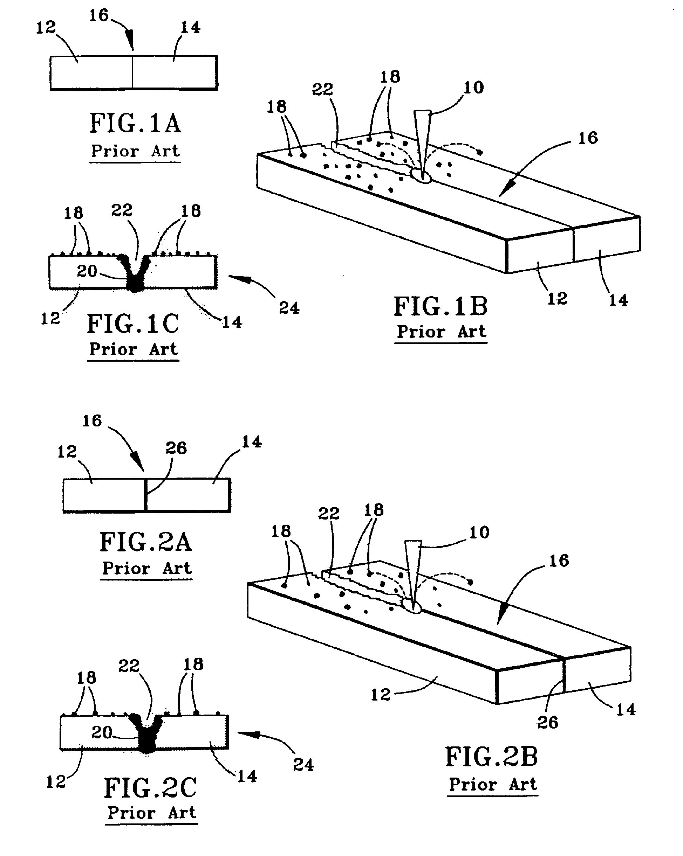

A relatively recent breakthrough advancement in laser beam welding is the development of high-powered solid-state lasers, which as defined herein include power levels of greater than four kilowatts and especially 10 kilowatts or more. Particular examples are solid-state lasers that use ytterbium oxide (Yb₂O₃) in disc form (Yb:YAG disc lasers) or as an internal coating in a fiber (Yb fiber lasers). These lasers are known to be capable of greatly increased efficiencies and power levels, for example, from approximately four kilowatts to over twenty kilowatts. However, a shortcoming with high-powered lasers is that they are relatively high-heat input processes, as opposed to low-heat input processes traditionally associated with laser beam and electron beam welding. High temperatures generated during welding with high-powered laser beams are an impediment to welding relatively thick sections of 0.5 inch (about 12.5 mm) and greater, and particularly about 0.75 inch (about 2 cm) and greater in the direction normal to the surface being welded. As an example, FIGS. 1A through 1C represent a joint region 16 between a pair of metallic components 12 and 14 undergoing welding with a high-powered laser beam 10 to form a welded assembly 24. The beam 10 is represented as blowing away the molten metal at the weld area, creating spatter 18 and a weld joint 20 that contains a weldment discontinuity 22, represented as a large "lack-of-fill" defect.

As represented in FIGS. 2A through 2C, simply placing a shim 26 within the joint region 16 does not fully or adequately alleviate the problem of spattering and weldment discontinuities when welding with high-powered laser beams. Other attempts have generally been directed to optical approaches intended to reduce the disruptive effect of a high-powered laser beam. One example involves de-focusing or under-focusing the beam by focusing the beam below the base metal surface, particularly when attempting to weld thick metal sections. This approach has achieved some improvements, though the depth of penetration is reduced and weld defects still persist. Although some stabilization of the weld keyhole can be achieved with this approach, a significant amount of weld spatter and weld metal discontinuities still result.

United States Patent Application No. 2007/017906 A describes a method of laser beam welding at least two adjacent superalloy components including aligning the components along a pair of faying surfaces but without a backing plate; placing a superalloy shim between the faying surfaces; welding the components together using a laser beam causing portions of the superalloy components along the faying surfaces to mix with the superalloy shim and cooling the components to yield a butt weld between the components.

German Patent Application No. 2423577 describes an electron beam welding method wherein a metal plate is placed on the top surfaces of the two workpieces extending along the gap therebetween and a filler material is placed below the plate within the gap.

In view of the above, welding with high-powered lasers has been generally limited to relatively thin metal thicknesses (less than 1 cm, more typically less than 2.5 mm) due to weld pool instability. Consequently, a need still exists for a high-powered laser beam welding process capable of joining relatively thick metallic sections.

### BRIEF DESCRIPTION OF THE INVENTION

The present invention generally provides a method and an assembly for welding metallic materials using a high-powered laser beam as recited in claims 1 and 6 respectively, by which the weld keyhole is stabilized and the incidence of spattering and weldment discontinuities is reduced. The method is particularly well suited for welding components formed of nickel-based, iron-based alloys, cobalt-based, copper-based, aluminum-based, and titanium-based alloys, nonlimiting examples of which include alloys used in the fabrication of gas turbine components.

The weld joint is substantially free of voids between the articles and defines a weldment surface that substantially coincides with the juxtaposed surfaces of the articles prior to the welding step.

As a result of the ability to stabilize a high-powered laser beam for welding applications and reduce spattering and weldment discontinuities, potential advantages of the invention include the ability to join greater material thicknesses using laser technology. In so doing, advantages of high-powered laser beam welding become available for a variety of products, including but not limited to power generation, aerospace, infrastructure, medical, and industrial applications.

Other aspects and advantages of this invention will be better appreciated from the following detailed description.

### BRIEF DESCRIPTION OF THE DRAWINGS

There follows a detailed description of embodiments of the invention by way of example only with reference to the accompanying drawings, in which:
FIGS. 1A, 1B and 1C depict, respectively, an end view of two articles abutted together for welding, a perspective view of the articles during laser beam welding of their abutting faces, and a cross-sectional view of the resulting weldment in accordance with a first prior art practice.
FIGS. 2A, 2B and 2C depict, respectively, an end view of two articles abutted together for welding, a perspective view of the articles during laser beam welding of their abutting faces, and a cross-sectional view of the resulting weldment in accordance with a second prior art practice.
FIGS. 3A, 3B, 3C and 3D depict, respectively, an end view of two articles, an end view of the articles of FIG. 3A abutted together in preparation for welding, a perspective view of the articles during laser beam welding of their abutting faces, and a cross-sectional view of the resulting weldment in accordance with an embodiment of the present invention.
FIG. 4 schematically represents the disruption of the laser beam by a shim shown in FIGS. 3B and 3C.

### DETAILED DESCRIPTION OF THE INVENTION

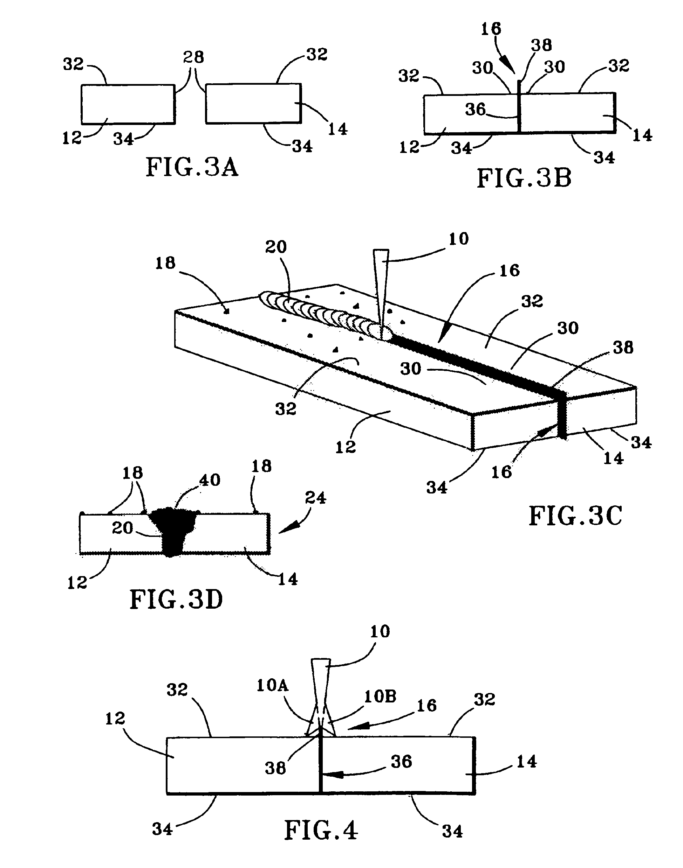

FIGS. 3A through 3D and 4 represent a process for high-powered laser beam welding articles to create a weld joint 20 (FIGS. 3C and 3D) that extends entirely through the thickness of the articles without creating discontinuities and with minimal spattering during the welding process. The process is particularly well suited for fabricating components for gas turbines used in power generation and aerospace applications, though the process can be utilized to produce components for a wide variety of applications, including infrastructure, medical, industrial applications, etc. For convenience, reference numbers used in prior art FIGS. 1A-1C and 2A-C are also used in FIGS. 3A-D and 4 to identify functionally similar elements.

FIG. 3A represents a pair of articles 12 and 14 that can be welding using a high-powered laser beam welding process of this invention. The articles 12 and 14 may be castings, wrought, or powder metallurgical form, and may be formed of a variety of materials, including nickel-based, iron-based alloys, cobalt-based, copper-based, aluminum-based, and titanium-based alloys. The articles 12 and 14 have faying surfaces 28 to be metallurgically joined by welding. The faying surfaces 28 are contiguous with oppositely-disposed first and second surfaces 32 and 34 of the articles 12 and 14, between which the through-thickness of each article 12 and 14 is defined.

In FIG. 3B, the articles 12 and 14 are shown placed together so that their faying surfaces 28 face each other. A joint region 16 is identified as defined by the faying surfaces 28 as well as by immediately adjacent portions 30 of each article surface 32. These surface portions 30 are juxtaposed as a result of the manner in which the articles 12 and 14 have been mated. According to a particular aspect of the invention, the through-thickness of the joint region 16 (generally normal to the juxtaposed surfaces 30) can be 12.5 mm (0.5 inch) or more, and can exceed about 2 cm (about 0.75 inch). Though such thicknesses have previously proven to be an impediment to welding with high-powered laser beams (FIGS. 1A-C and 2A-C), the present invention overcomes problems of the prior art by placing a shim 36 between the articles 12 and 14, as represented in FIG. 3B, and carrying out the welding operation as represented in FIG. 4.

The shim 36 is shown in FIGS. 3B and 4 as between and contacted by both faying surfaces 28 of the articles 12 and 14. Notably, the shim 36 is larger than the faying surfaces 28, such that when placed with its lower extremity flush with the lower surfaces 34 of the articles 12 and 14, an upper edge portion 38 of the shim 36 protrudes from the articles 12 and 14 between their juxtaposed surfaces 30. While the use of shims that protrude between two articles to be welded have been employed in previous welding processes, as evidenced by U.S. Patent Nos. 6,489,583 and 6,596,411 to Feng et al., the manner in which welding processes of this invention make use of the shim 36 differs from these prior uses. During the welding operation portrayed in FIGS. 3C and 4, a high-powered laser beam 10 is not focused on the edge portion 38 of the shim 36, but is instead focused on the juxtaposed surfaces 30 of the articles 12 and 14. In contrast, Patent No. 6,596,411 under-focuses a laser or electron beam below the surfaces of the articles being welded, while Patent No. 6,489,583 is directed to an electron beam welding process and not laser beam welding. The role performed by the shim 36 also differs from the past, in that the shim 36 serves to diffract the laser beam 10 into diffracted portions 10A and 10B to either side of the shim 36, as represented in FIG. 4. In contrast, the shim employed by Patent No. 6,489,583 is simply disclosed as filling a gap between the articles being welded, and the shim employed by Patent No. 6,596,411 et al. is intended to produce a positive crown of weld metal to eliminate surface defects.

Because the beam 10 is focused on the juxtaposed surfaces 30 of the articles 12 and 14, the portion of the beam 10 impinging the edge portion 38 of the shim 36 is out-of-focus. While not wishing to be limited to any particular theory, the slightly out-of-focus beam 10 impinging the shim edge portion 38 is believed to be diffracted by the edge portion 38, and the diffracted portions 10A and 10B of the beam 10 are believed to projected onto the juxtaposed surfaces 30 of the articles 12 and 14. If a sufficient amount of the light (and therefore power) of the beam 10 is diffracted and distributed onto the juxtaposed surfaces 30, the harshness or cutting effect of the beam 10 is reduced and simultaneously heating of the surfaces 30 and molten flow parallel to the surfaces 30 is promoted. The result, portrayed in FIG. 3D, is a drastic reduction if not elimination of discontinuities in the weld joint 20, as well as a significantly reduced amount of spattering 18 during the welding process.

The distance that the edge portion 38 of the shim 36 protrudes from the surfaces 30 is believed to affect the diffraction of the beam 10 and the projection of the diffracted beam portions 10A and 10B onto the surfaces 30. Therefore, to ensure that the diffracted portions 10A and 10B are sufficient and projected onto the surfaces 30, the protrusion distance of the shim 36 is preferably controlled in the welding process of this invention. A minimum distance is believed to be about 1 mm (0.04 inch), and a maximum distance is believed to be 13 mm (0.5 inch). Preferred protrusion distances will depend in part on the base metals being joined, the type of shim material, and the welding parameters used, including beam quality, power level, beam diameter, travel speed, etc. Under conditions such as joining nickel- and iron-based alloys with power levels in excess of 4 kW, particularly about 10 kW or more, and a beam diameter of about 0.5 to about 1 mm (about 0.02 to about 0.04 inch), a preferred range for the protrusion distance is believed to be about 1.3 to about 6.5 mm (about 0.05 to about 0.25 inch). The width of the shim 36 may also influence the manner and extent to which the laser beam 10 is diffracted. Under the same conditions noted above, a suitable range for the shim thickness is believed to be about 0.12 mm to about 1.6 mm (0.005 inch to about 0.062 inch), for example, about 0.5 mm (about 0.02 inch).

Suitable and preferred compositions for the shim 36 will depend on the compositions of the articles 12 and 14 being welded. If the articles 12 and 14 are formed of a nickel-based alloy, for example, Nimonic® 263 per UNS N07263, a suitable alloy for the shim 36 is Inconel® 625 per AMS 5837. Particularly preferred alloys for the shim 36 are believed to be those that are beneficial to the weld metal chemistry, resist solidification discontinuities, and provide improved material properties, such as ductility. It should be noted that the statically-placed shim 36 shown in FIGS. 3B, 3C and 4 could be replaced with a wire that is either preplaced or fed into the joint area 16 by a wire feeder. While a similar diffraction of the laser beam 10 may result, the limited volume of the wire would result in the wire material not being mixed throughout the resultant weld joint 20.

Preferred high-powered lasers are solid-state lasers that use ytterbium oxide (Yb₂O₃) in disc form (Yb:YAG disc lasers) or as an internal coating in a fiber (Yb fiber lasers). As noted above, typical parameters for the high-powered laser welding process include a power level of 10 kilowatts according to the present invention or more, and a laser beam diameter of about 0.5 to about 1 millimeter (for example, at the juxtaposed surfaces 30). Other suitable operating parameters are believed to include either a pulsed or continuous mode of operation and a travel speed of about 2.5 mm/s to about 4 cm/s (about 6 inches to about 100 inches per minute). The pulsing (or gating) parameters can be controlled down to about one millisecond. Typical gating from 10kW peak to background levels less than 50% of peak power at cycles up to 1000 hertz have been used. Control of the beam 10 can be achieved with any suitable robotic machinery. The welding process can be performed in any atmosphere suitable for prior art laser beam welding processes (for example, an inert shielding gas, active shielding gas, or a combination thereof to form a mixed shielding gas). Consistent with laser beam welding processes and equipment known in the art, the laser beam welding process of this invention does not need to be performed in a vacuum or inert atmosphere.

Prior to welding, the articles 12 and 14 may be preheated, and a backing strip (not shown) may be placed in contact with the lower surfaces 34 of the articles 12 and 14 to bridge the gap filled by the shim 36. As represented in FIGS. 3C and 4, welding of the articles 12 and 14 entails projecting the high-powered laser beam 10 onto the joint region 16, with the beam 10 focused on the juxtaposed surfaces 30 as previously noted. The beam 10 and its diffracted portions 10A and 10B melt the shim 36, the juxtaposed surfaces 30, and the faying surfaces 28 of the articles 12 and 14, creating a molten pool that defines the weld keyhole. Because the energy of the beam 10 is somewhat dispersed, the molten material at the juxtaposed surfaces 30 and within the weld keyhole does not tend to be blown away by the high power of the beam 10. As a result, and as previously noted, the amount of spatter 18 is greatly reduced (is indicated in FIGS. 3C and 3D), and the weld joint 20 is essentially free of the large weldment discontinuities 22 seen in the prior art (FIGS. 1C and 2C). Consequently, the surface 40 of the weld joint 20 substantially coincides with the original juxtaposed surfaces 30 of the articles 12 and 14, which are largely melted and flow during welding. On cooling, the articles 12 and 14 are metallurgically joined by the weld joint 20, which extends entirely through the through-thickness of the resulting welded assembly 24. While the weld joint 20 depicted in FIG. 3D is a square groove butt joint, it should be noted that other joint types are foreseeable, including corner joints, lap joints, edge joints, and tee joints.

In an investigation leading up to this invention, pairs of weld coupons formed of either nickel-based or iron-based alloys were assembled in the manner represented in FIG. 3B and welded using shims formed of Inconel® 617 per UNS N06617. The thicknesses of the coupons at the intended weld joints were about 9.5 mm or about 19 mm (about 0.375 inch or about 0.75 inch). The shims were about 0.5 mm (about 0.02 inch) thick and projected about 1 mm to about 6 mm (about 0.04 to about 0.25 inch) above the surfaces of the coupons. The assembled coupons were welded using a commercially-available Yb fiber laser beam weld machine operating, according to the present invention, at a power level of about 10 kW. The welding process exhibited minimal plume at the surface of the coupons and significant stabilization of the weld pool within the weld keyhole, leading to reduced spattering, elimination of weldment discontinuities, and improved weld metal quality. Furthermore, the resulting weldments extended entirely through the thickness of the joints between the coupons.

From the investigation, it was concluded that the shims effectively disrupted the high power laser beam before it impinged the weld joint areas of the coupons, eliminating the harshness or cutting effect of the beam on the resultant weld pool to promote a smoother flow of molten metal and eliminate weld defects. Importantly, the disruption did not reduce the penetration of the weld.

While the invention has been described in terms of a preferred embodiment, it is apparent that other forms could be adopted by one skilled in the art. Accordingly, the scope of the invention is to be limited only by the following claims.

## Claims

1. A method of high-powered laser beam welding at least two metallic articles (12,14) by metallurgically joining faying surfaces (28) of the articles (12,14) that are contiguous with oppositely-disposed first and second surfaces (32,34) of the articles (12,14), the method comprising the steps of:
placing the articles (12,14) together so that the faying surfaces (28) thereof face each other, a joint region (16) is defined comprising the faying surfaces (28) and juxtaposed surfaces (30) of the articles (12,14) that are defined by portions of the first surfaces (32) of the articles (12,14) adjacent the faying surfaces (28) and remain exposed after the articles (12,14) are placed together, a metallic shim (36) is between the articles (12,14) and contacts the faying surfaces (28), and an edge portion (38) of the shim (36) protrudes by at least one to thirteen millimeters from the juxtaposed surfaces (30) of the articles (12,14); **characterised by**:
welding the articles (12,14) together by projecting a high-powered laser beam (10) onto the joint region (16), the laser beam (10) being at a power level of greater than 10 kilowatts and being focused on the juxtaposed surfaces (30) of the articles (12,14) to have a diameter of 0.5 to 1 millimeter at the juxtaposed surfaces (30) of the articles (12,14), wherein the laser beam is unfocused on the edge portion (38) of the shim (36) so that portions (10A,10B) of the laser beam (10) are diffracted by the edge portion (38) onto the juxtaposed surfaces (30) of the articles (12,14), the laser beam (10) and the diffracted portions (10A,10B) thereof melting the juxtaposed surfaces (30) of the articles (12,14), the faying surfaces (28) of the articles (12,14), and the shim (36) and causing flow of molten material at the juxtaposed surfaces (30) and then
cooling the articles (12,14) to yield a welded assembly (24) comprising a weld joint (20) entirely through a through-thickness of the welded assembly (24) between the first and second surfaces (32,34) of the articles (12,14), the weld joint (20) defining a weldment surface (40) that substantially coincides with the juxtaposed surfaces (30) of the articles (12,14) prior to the welding step, the weld joint (20) being substantially free of voids between the articles (12,14).

2. The method according to claim 1, **characterized in that** the articles (12,14) and the shim (36) are formed of nickel-based, iron-based alloys, cobalt-based, copper-based, aluminum-based, or titanium-based alloys.

3. The method according to of claim 1 or 2, **characterized in that** the shim (36) has a thickness normal to the faying surfaces (28) of 0.12 to 1.6 millimeter.

4. The method according to any of claims 1, 2 or 3, **characterized in that** the through-thickness of the welded assembly (24) is at least 12.5 millimeters.

5. The method according to any of claims 1 to 4, **characterized in that** the welded assembly (24) is a component of a gas turbine engine.

6. An assembly for performing a high-powered laser beam welding process, the assembly comprising:
a laser beam apparatus with focusing means;
at least two metallic articles (12,14) comprising faying surfaces (28) that are contiguous with oppositely-disposed first and second surfaces (32,34) of the articles (12,14) and juxtaposed surfaces (30) that are defined by portions of the first surfaces (32) of the articles (12,14) adjacent the faying surfaces (28), the articles (12,14) being positioned so that the faying surfaces (28) thereof face each other, the juxtaposed surfaces (30) are exposed, and a joint region (16) is defined comprising the faying surfaces (28) and the juxtaposed surfaces (30); and
a metallic shim (36) between the articles (12,14) and contacting the faying surfaces (28), an edge portion (38) of the shim (36) protruding by at least one to thirteen millimetres from the juxtaposed surfaces (30) of the articles (12,14), **characterised in that** the laser beam apparatus is a high powered layer beam apparatus, so that in use, when a high-powered laser beam is (10) projected onto the joint region (16), the high-powered laser apparatus is at a power level of greater than 10 kilowatts and so focused by the focusing means on the juxtaposed surfaces (30) of the articles (12,14), to have a diameter of 0.5 to 1 millimeter thereat, wherein the laser beam is unfocused on the edge portion (38) of the shim (36).

7. The assembly according to claim 6, wherein the articles and the shim are formed of nickel-based, iron-based alloys, cobalt-based, copper-based, aluminum-based, or titanium-based alloys.

8. The assembly according to claim 6 or 7, wherein the shim has a thickness normal to the faying surfaces of 0.12 to 1.6 millimeters.

9. A assembly according to any of claims 6 to 8, wherein the assembly has a through-thickness of at least 12.5 millimeters.

## Patentansprüche

1. Verfahren zum Hochleistungs-Laserstrahlschweißen von wenigstens zwei metallischen Artikeln (12, 14) durch metallurgisches Verbinden von Passflächen (28) der Artikel (12, 14), die an einander gegenüberliegende erste und zweite Oberflächen (32, 34) der Artikel (12, 14) grenzen, wobei das Verfahren folgende Schritte umfasst:
Zusammenplatzieren der Artikel (12, 14), so dass ihre Passflächen (28) einander zugewandt sind, ein Verbindungsbereich (16) definiert wird, der die Passflächen (28) und nebeneinanderliegende Oberflächen (30) der Artikel (12, 14), die durch den Passflächen (28) benachbarte Abschnitte der ersten Oberflächen (32) der Artikel (12, 14) definiert sind und nach dem Zusammenplatzieren der Artikel (12, 14) weiterhin freiliegen, umfasst, sich zwischen den Artikeln (12, 14) eine metallische Zwischenlage (36) befindet, die in Kontakt mit den Passflächen (28) ist, und ein Randabschnitt (38) der Zwischenlage (36) mindestens einen bis dreizehn Millimeter über die nebeneinanderliegenden Oberflächen (30) der Artikel (12, 14) vorsteht; **gekennzeichnet durch**:
Zusammenschweißen der Artikel (12, 14) **durch** Projizieren eines Hochleistungslaserstrahls (10) auf den Verbindungsbereich (16), wobei der Laserstrahl (10) eine Leistung von mehr als 10 Kilowatt aufweist und so auf die nebeneinanderliegenden Oberflächen (30) der Artikel (12, 14) fokussiert ist, dass er an den nebeneinanderliegenden Oberflächen (30) der Artikel (12, 14) einen Durchmesser von 0,5 bis 1 Millimeter aufweist, wobei der Laserstrahl am Randabschnitt (38) der Zwischenlage (36) nicht fokussiert ist, so dass Teile (10A, 10B) des Laserstrahls (10) **durch** den Randabschnitt (38) so gebeugt werden, dass sie auf die nebeneinanderliegenden Oberflächen (30) der Artikel (12, 14) treffen, wobei der Laserstrahl (10) und seine gebeugten Teile (10A, 10B) die nebeneinanderliegenden Oberflächen (30) der Artikel (12, 14), die Passflächen (28) der Artikel (12, 14) und die Zwischenlage (36) schmelzen und ein Fließen von geschmolzenem Material an den nebeneinanderliegenden Oberflächen (30) bewirken, und anschließend
Abkühlen der Artikel (12, 14) zum Erhalt einer geschweißten Anordnung (24), die eine sich vollständig über eine Gesamtdicke der geschweißten Anordnung (24) zwischen den ersten und zweiten Oberflächen (32, 34) der Artikel (12, 14) erstreckende Schweißverbindung (20) umfasst, wobei die Schweißverbindung (20) eine Verschweißungsfläche (40) definiert, die im Wesentlichen den nebeneinanderliegenden Oberflächen (30) der Artikel (12, 14) vor dem Schweißschritt entspricht, wobei die Schweißverbindung (20) im Wesentlichen keine Leerräume zwischen den Artikeln (12, 14) aufweist.

2. Verfahren nach Anspruch 1, **dadurch gekennzeichnet, dass** die Artikel (12, 14) und die Zwischenlage (36) aus nickelbasierten, eisenbasierten, kobaltbasierten, kupferbasierten, aluminiumbasierten oder titanbasierten Legierungen ausgebildet sind.

3. Verfahren nach Anspruch 1 oder 2, **dadurch gekennzeichnet, dass** die Zwischenlage (36) senkrecht zu den Passflächen (28) eine Dicke von 0,12 bis 1,6 Millimetern aufweist.

4. Verfahren nach einem der Ansprüche 1, 2 oder 3, **dadurch gekennzeichnet, dass** die Gesamtdicke der geschweißten Anordnung (24) wenigstens 12,5 Millimeter beträgt.

5. Verfahren nach einem der Ansprüche 1 bis 4, **dadurch gekennzeichnet, dass** die geschweißte Anordnung (24) ein Bauteil eines Gasturbinenmotors ist.

6. Anordnung zur Durchführung eines Hochleistungs-Laserstrahlschweißvorgangs, wobei die Anordnung umfasst:
ein Laserstrahlgerät mit Fokussiermitteln;
wenigstens zwei metallische Artikel (12, 14), die Passflächen (28), die an einander gegenüberliegende erste und zweite Oberflächen (32, 34) der Artikel (12, 14) grenzen, und nebeneinanderliegende Oberflächen (30), die durch den Passflächen (28) benachbarte Abschnitte der ersten Oberflächen (32) der Artikel (12, 14) definiert sind, umfassen, wobei die Artikel (12, 14) so angeordnet sind, dass ihre Passflächen (28) einander zugewandt sind, die nebeneinanderliegenden Oberflächen (30) freiliegen und ein die Passflächen (28) und die nebeneinanderliegenden Oberflächen (30) umfassender Verbindungsbereich (16) definiert wird; und
eine metallische Zwischenlage (36) zwischen den Artikeln (12, 14), die in Kontakt mit den Passflächen (28) ist, wobei ein Randabschnitt (38) der Zwischenlage (36) mindestens einen bis dreizehn Millimeter über die nebeneinanderliegenden Oberflächen (30) der Artikel (12, 14) vorsteht, **dadurch gekennzeichnet, dass** das Laserstrahlgerät ein Hochleistungslaserstrahlgerät ist, so dass das Hochleistungslasergerät bei Verwendung beim Projizieren eines Hochleistungslaserstrahls (10) auf den Verbindungsbereich (16) eine Leistung von mehr als 10 Kilowatt aufweist und durch die Fokussiermittel so auf die nebeneinanderliegenden Oberflächen (30) der Artikel (12, 14) fokussiert ist, dass dort ein Durchmesser von 0,5 bis 1 Millimeter vorliegt, wobei der Laserstrahl am Randabschnitt (38) der Zwischenlage (36) nicht fokussiert ist.

7. Anordnung nach Anspruch 6, wobei die Artikel und die Zwischenlage aus nickelbasierten, eisenbasierten, cobaltbasierten, kupferbasierten, aluminiumbasierten oder titanbasierten Legierungen ausgebildet sind.

8. Anordnung nach Anspruch 6 oder 7, wobei die Zwischenlage senkrecht zu den Passflächen eine Dicke von 0,12 bis 1,6 Millimetern aufweist.

9. Anordnung nach einem der Ansprüche 6 bis 8, wobei die Anordnung eine Gesamtdicke von wenigstens 12,5 Millimetern aufweist.

## Revendications

1. Procédé de soudage par faisceau laser à haute puissance d'au moins deux articles métalliques (12, 14) par jonction métallurgique de surfaces affleurées (28) des articles (12, 14) qui sont contiguës avec les premières et secondes surfaces (32, 34) des articles (12, 14) disposées à l'opposé, le procédé comprenant les étapes consistant à :
placer les articles (12, 14) conjointement de sorte que leurs surfaces affleurées (28) soient en regard l'une de l'autre, qu'une région de jonction (16) soit définie, comprenant les surfaces affleurées (28) et les surfaces juxtaposées (30) des articles (12, 14) qui sont définies par des portions des premières surfaces (32) des articles (12, 14) adjacentes aux surfaces affleurées (28) et restent exposées une fois que les articles (12, 14) ont été disposés conjointement, qu'une cale métallique (36) soit située entre les articles (12, 14) et vienne en contact avec les surfaces affleurées (28), et qu'une portion de bord (38) de la cale (36) fasse saillie d'au moins un à treize millimètres des surfaces juxtaposées (30) des articles (12, 14) ; **caractérisé par** les étapes consistant à :
souder les articles (12, 14) l'un à l'autre en projetant un faisceau laser de haute puissance (10) sur la région de jonction (16), le faisceau laser (10) étant à un niveau d'énergie supérieur à 10 kilowatts et étant focalisé sur les surfaces juxtaposées (30) des articles (12, 14) de manière à avoir un diamètre de 0,5 à 1 millimètre sur les surfaces juxtaposées (30) des articles (12, 14), dans lequel le faisceau laser n'est pas focalisé sur la portion de bord (38) de la cale (36) de sorte que des portions (10A, 10B) du faisceau laser (10) soient diffractées par la portion de bord (38) sur les surfaces juxtaposées (30) des articles (12, 14), le faisceau laser (10) et ses portions diffractées (10A, 10B) faisant fondre les surfaces juxtaposées (30) des articles (12, 14), les surfaces affleurées (28) des articles (12, 14) et la cale (36) et provoquant un écoulement de matériau fondu sur les surfaces juxtaposées (30), et ensuite
refroidir les articles (12, 14) pour obtenir un assemblage soudé (24) comprenant un joint de soudure (20) passant entièrement à travers l'épaisseur de l'assemblage soudé (24) entre les premières et secondes surfaces (32, 34) des articles (12, 14), le joint de soudure (20) définissant une surface de soudure (40) qui coïncide sensiblement avec les surfaces juxtaposées (30) des articles (12, 14) avant l'étape de soudage, le joint de soudure (20) étant sensiblement exempt de vides entre les articles (12, 14).

2. Procédé selon la revendication 1, **caractérisé en ce que** les articles (12, 14) et la cale (36) sont formés d'alliages à base de nickel, à base de fer, à base de cobalt, à base de cuivre, à base d'aluminium ou à base de titane.

3. Procédé selon la revendication 1 ou la revendication 2, **caractérisé en ce que** la cale (36) a une épaisseur normale aux surfaces affleurées (28) de 0,12 à 1,6 millimètre.

4. Procédé selon l'une quelconque des revendications 1, 2 ou 3, **caractérisé en ce que** l'épaisseur totale de l'assemblage soudé (24) est d'au moins 12,5 millimètres.

5. Procédé selon l'une quelconque des revendications 1 à 4, **caractérisé en ce que** l'assemblage soudé (24) est un composant d'un moteur à turbine à gaz.

6. Assemblage pour effectuer un processus de soudage par faisceau laser de haute puissance, l'assemblage comprenant :
un appareil à faisceau laser avec des moyens de focalisation ;
au moins deux articles métalliques (12, 14) comprenant des surfaces affleurées (28) qui sont contiguës avec des premières et secondes surfaces (32, 34) des articles (12, 14) disposées à l'opposé et des surfaces juxtaposées (30) qui sont définies par des portions des premières surfaces (32) des articles (12, 14) adjacentes aux surfaces affleurées (28), les articles (12, 14) étant positionnés de sorte que leurs surfaces affleurées (28) soient en regard l'une de l'autre, que les surfaces juxtaposées (30) soient exposées et que soit définie une région de jonction (16) comprenant les surfaces affleurées (28) et les surfaces juxtaposées (30) ; et
une cale métallique (36) entre les articles (12, 14) et venant en contact avec les surfaces affleurées (28), une portion de bord (38) de la cale (36) faisant saillie d'au moins un à treize millimètres des surfaces juxtaposées (30) des articles (12, 14), **caractérisé en ce que** l'appareil à faisceau laser est un appareil à faisceau laser de haute puissance de sorte que, en usage, lorsqu'un faisceau laser de haute puissance (10) est projeté sur la région de jonction (16), l'appareil à laser de haute puissance se situe à un niveau d'énergie supérieur à 10 kilowatts et soit focalisé par les moyens de focalisation sur les surfaces juxtaposées (30) des articles (12, 14) de manière à avoir un diamètre de 0,5 à 1 millimètre sur celles-ci, dans lequel le faisceau laser n'est pas focalisé sur la portion de bord (38) de la cale (36).

7. Assemblage selon la revendication 6, dans lequel les articles et la cale sont formés d'alliages à base de nickel, à base de fer, à base de cobalt, à base de cuivre, à base d'aluminium ou à base de titane.

8. Assemblage selon la revendication 6 ou la revendication 7, dans lequel la cale a une épaisseur normale aux surfaces affleurées de 0,12 à 1,6 millimètre.

9. Assemblage selon l'une quelconque des revendications 6 à 8, **caractérisé en ce que** l'assemblage a une épaisseur totale d'au moins 12,5 millimètres.
